# FASCICULE DE BREVET EUROPEEN

(11) **EP 0 506 551 B1**
(45) Date de publication et mention de la délivrance du brevet: **06.09.1995**
(21) Numéro de dépôt: 92400801.4
(22) Date de dépôt: 25.03.1992
(51) Int. Cl.: B65G 47/51

(54) **Convoyeur à accumulation**
Speicherförderer
Accumulator conveyor

(30) Priorité: 27.03.1991 FR 9103696
(43) Date de publication de la demande: 30.09.1992
(73) Titulaire: SOCIETE ANONYME DES USINES FARMAN, F-92310 SEVRES (FR)
(72) Inventeur: Wack, André, F-77580 Serbonne par Crecy-la-Chapelle (FR); Cosset, André, F-93460 Gournay Sur Marne (FR)
(74) Mandataire: CABINET BONNET-THIRION

(56) Documents cités:
- CH-A- 329 967
- CH-A- 472 265
- DE-C- 440 796
- FR-A- 1 368 646
- FR-A- 2 510 527
- FR-A- 2 529 180
- FR-A- 2 618 753
- US-A- 4 231 470

## Description

La présente invention concerne les convoyeurs du genre dit à accumulation, comportant au moins une chaîne sans fin et une pluralité de moyens de support de pièces, dits navettes, ces navettes étant adaptées à être entraînées vers un poste de déchargement mais avec une possibilité d'être arrêtées à ce poste ou à un quelconque autre endroit en provoquant alors une accumulation des navettes suivantes. Les navettes ainsi accumulées les unes derrière les autres en amont par rapport au sens du défilement du convoyeur peuvent donc constituer une réserve de pièces disponibles au poste de déchargement.

Les convoyeurs à accumulation constituent des moyens particulièrement appréciés pour l'alimentation en pièces de quelconques utilisateurs, opérateurs ou robots : ils présentent cependant l'inconvénient d'occuper dans les ateliers une surface de plancher considérable, ce qui augmente les frais d'investissement requis pour leur installation.

On citera par exemple le convoyeur décrit dans le document FR 2 529 180 qui présente une structure en "L" avec une boucle chargée qui peut se déployer verticalement et une boucle vide qui peut se déployer horizontalement à l'aide de curseurs mobiles qui sont fixés aux extrémités respectives d'une chaîne d'entraînement. On citera également à titre d'exemple les convoyeurs du type de ceux décrits dans les brevets DE-U-9012074, EP-A-0168872, U.S.A. 4.142.626 et CH 472 265.

Si d'autres convoyeurs remédient dans une certaine mesure à cet inconvénient, comme c'est le cas pour ceux du type décrit dans le brevet français 2 510 527, ils mettent en oeuvre des dispositifs compliqués nécessitant des moyens agissant indépendamment sur la présentation des navettes au poste de chargement et leur entraînement à partir de ce poste et sur la présentation de ces mêmes navettes au poste de déchargement et leur entraînement ultérieur à partir de ce poste.

La présente invention a pour objet un convoyeur à accumulation conçu pour pouvoir se développer en hauteur avec le minimum d'encombrement tout en faisant appel également au minimum de moyens pour l'entraînement des navettes.

Elle propose un convoyeur selon la revendication 1.

Avec un tel agencement il devient possible d'organiser le développement en hauteur des deux boucles formées par la chaîne porte-navettes, donc de réduire au minimum la surface au sol requise, et au minimum les moyens d'entraînement des navettes, tout en conservant une complète et commode accessibilité des postes de chargement et de déchargement.

L'invention sera mieux comprise à la lumière de la description qui va suivre, donnée uniquement à titre d'exemple et faite en référence aux dessins annexés dans lesquels :
- la figure 1 illustre schématiquement une vue en élévation d'un convoyeur selon un exemple de mode de réalisation ;
- la figure 2 illustre une vue de côté du convoyeur selon la flèche II de la figure 1 ;
- les figures 3 à 6, sont des schémas simplifiés illustrant différentes situations rencontrées en cours de fonctionnement du convoyeur ;
- les figures 7 et 8 sont des schémas semblables relatifs à une variante ;
- la figure 9 est une vue schématique en perspective d'un second mode de réalisation possible d'un convoyeur selon l'invention ;
- la figure 10 est une vue en perspective d'une section de chaîne du type dit biplan avec une portion de sa roue d'engrenage et
- la figure 11 est une vue schématique en perspective d'une forme de réalisation possible d'un châssis poteau supportant un convoyeur selon l'invention.

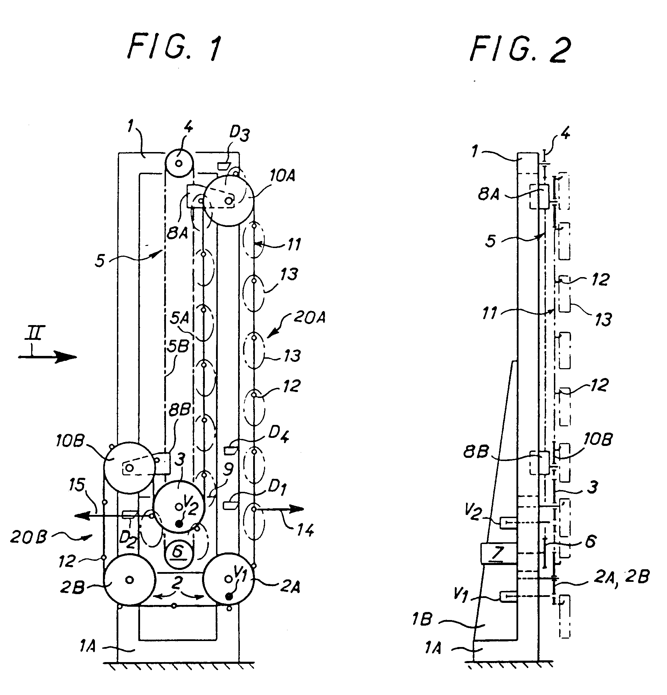

Selon la forme de réalisation choisie et représentée aux figures 1 et 2, les différents éléments formant le convoyeur sont fixés sur un châssis vertical 1 en forme de cadre avec une embase 1A en équerre pour le scellement et des goussets de raidissement 1B. Sur la partie frontale inférieure de chaque montant du cadre est fixée une roue dentée, libre en rotation, l'ensemble de ces deux roues libres 2A et 2B formant un moyen de renvoi 2, dit extérieur. Une troisième roue dentée 3 libre en rotation est fixée au centre d'une traverse (non détaillée) du cadre, au dessus du moyen de renvoi extérieur 2. Elle forme un moyen de renvoi 3 dit intérieur. Il est prévu des moyens de verrouillage V1 et V2 respectivement, de la roue libre 2B, et de la roue libre 3. Une quatrième roue dentée 4 libre en rotation est fixée sur la traverse supérieure du cadre du châssis. Une chaîne sans fin dite porte-chariots 5 est engagée, d'une part, sur la roue libre 4 et, d'autre part, sur une roue dentée 6 entraînée par un moteur 7 fixé sur une traverse en partie inférieure du châssis, en dessous du moyen de renvoi intérieur 3. Cette chaîne porte-chariots 5 est formée ainsi de deux brins verticaux 5A, 5B respectivement affectés à deux chariots dits de chargement 8A et de déchargement 8B, fixés à équidistance le long de la chaîne 5. Le moteur 7 est adapté à entraîner la chaîne porte-chariots 5 en va-et-vient, les chariots 8A et 8B pouvant atteindre en alternance chacun deux positions extrêmes opposées, fixées par des butées (non détaillées) définissant respectivement une position extrême supérieure à l'approche de la roue libre 4 et une position extrême inférieure à l'approche du moyen de renvoi intérieur 3. Sur chaque chariot est montée libre en rotation une roue dentée, dite de chariot 10A, 10B. Une chaîne sans fin dite porte-navettes 11 suit un parcours empruntant successivement les roues libres 2A et 2B formant le moyen de renvoi extérieur 2, la roue de chariot 10A, la roue libre formant le moyen de renvoi intérieur 3 et la roue de chariot 10B. Tout au long de cette chaîne porte-navettes 11 sont disposées à intervalles égaux prédéterminés des navettes indiquées schématiquement comme en 12, pouvant être constituées par exemple de crochets ou de plateaux, destinées à convoyer des pièces 13.

Il est prévu un poste de chargement 14 et un poste de déchargement 15 équipés de moyens de détection D1 et D2 respectivement adaptés à détecter la présentation d'une pièce au poste de chargement, et l'absence de pièce au poste de déchargement. Les moyens de détection D1 et D2 provoquent l'intervention du moteur 7 d'entraînement de la chaîne porte-chariots 5, en vue de déplacements pas à pas de la chaîne porte-navettes 11, de manière à convoyer les pièces vers le poste de déchargement 15. Des moyens de détection D3 et D4 sont également prévus pour informer un opérateur s'occupant du chargement respectivement lorsque le chariot de chargement 8A atteint l'une ou l'autre de ses positions extrêmes supérieure et inférieure déterminées par les butées précitées.

Sur la figure 2 on voit mieux que l'ensemble des éléments de la chaîne porte-navettes, formant le convoyeur proprement dit, se situe en façade du châssis 1 et demeure totalement accessible notamment aux postes de chargement 14 et de déchargement 15.

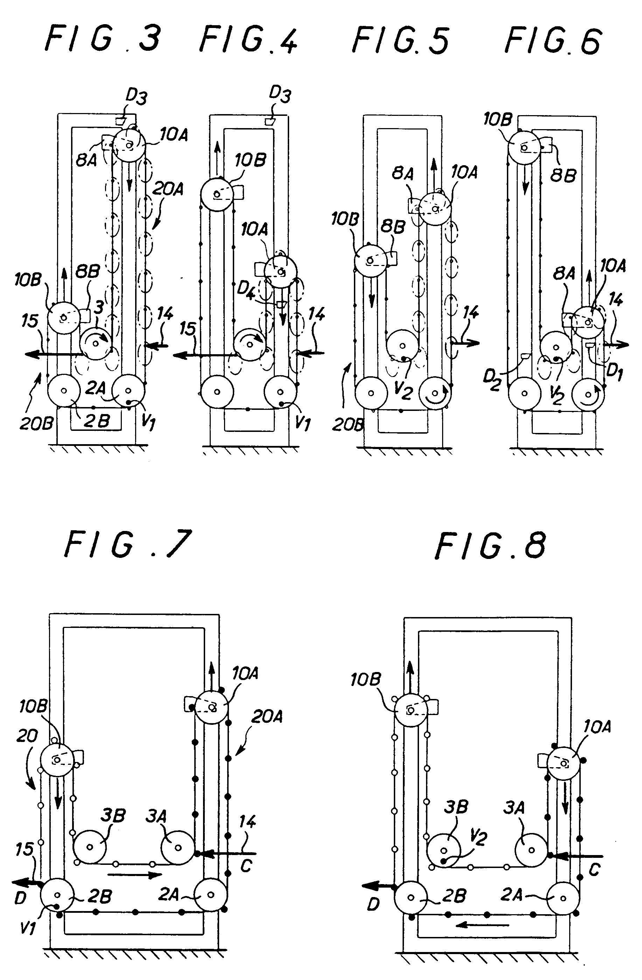

Pour la description du fonctionnement du convoyeur selon l'invention, on se réfère maintenant aux figures 3 à 8, sur lesquelles la chaîne porte-chariots 11 et le moteur d'entrainement 7 n'ont pas été représentés dans un souci de clarté.

L'objectif du convoyeur est d'offrir à tout moment une pièce disponible au poste de déchargement 15, pour un utilisateur (opérateur ou robot). L'intérêt d'un convoyeur à accumulation est de permettre à un opérateur de charger des pièces en discontinu pour former une réserve de pièces disponibles, lui-même pouvant s'occuper ainsi de plusieurs convoyeurs à la fois. Cette réserve de pièces, se réalise selon la présente invention par accumulation en hauteur sur une boucle de chaîne porte-navettes 20A, qui se déploie, située entre le poste de chargement 14 et le poste de déchargement 15, cette boucle empruntant successivement la roue de chariot de chargement qui lui sert de roue tendeuse 10A puis le moyen de renvoi intérieur 3 de sortie vers le poste de déchargement 15. Les pièces sont acheminées ainsi par la boucle 20A de navettes chargées du poste de chargement 14 vers le poste de déchargement 15. La réserve de pièces atteint son maximum lorsque le chariot 8A portant la roue tendeuse 10A de cette boucle atteint sa position extrême supérieure (figure 1).

Le fonctionnement sera expliqué en partant par exemple de cette situation du convoyeur reprise à la figure 3 où le chariot tendeur 10A est donc en sa position la plus haute déterminée par la butée haute D3; la boucle 20A formée autour la roue 10A de ce chariot et constituant la réserve de navettes chargées présente dans cette situation son développement maximal, tandis que la boucle complémentaire 20B formée autour de la roue tendeuse 10B du chariot de déchargement présente alors son développement minimal.

Chaque enlèvement d'une pièce du poste de déchargement 15 détecté par le détecteur D2 provoque par activation du verrou V1 le blocage du renvoi extérieur 2 et la rotation d'un pas de la roue de chaîne 6 dans le sens des aiguilles d'une montre, entraînant (Fig 3) par l'intermédiaire de la chaîne porte-chariot la descente d'un pas du chariot de chargement 8A et la montée d'un pas du chariot de déchargement 8B : une navette chargée est venue remplacer ainsi au poste de déchargement la navette précédemment déchargée ; un pas de la chaîne s'est trouvé transféré de la boucle 20A dans la boucle 20B.

Cette opération peut se répéter par exemple jusqu'à une situation telle qu'illustrée à la figure 4.

On suppose maintenant que l'opérateur intervient pour en quelque sorte "refaire le plein" de la boucle d'accumulation 20A. Il lui suffit de présenter une pièce en regard du détecteur D1 du poste de chargement pour provoquer cette fois, après activation du verrou V2 du renvoi interne une rotation en sens anti-horaire de la roue de chaîne 6 entraînant par l'intermédiaire de la chaîne porte-chariot la montée d'un pas du chariot de chargement 8A et la descente correspondante du chariot de déchargement 8B. On peut recharger ainsi pas à pas la boucle d'accumulation comme illustré à la figure 5.

La figure 6 montre l'arrivée en position limite inférieure du chariot de chargement 8A et la position limite haute du chariot de déchargement 8B : ceci déclenche un signal d'alarme destiné à provoquer l'intervention de l'opérateur en vue d'un réapprovisionnement des pièces et reconstitution de la réserve accumulée.

Les figures 7 et 8 sont des illustrations schématiques simplifiées d'une variante de réalisation où les mêmes références sont conservées pour désigner des éléments équivalents à ceux déjà considérés ci-dessus.

On reconnaît les deux boucles 20A, 20B formées ici de part et d'autre de deux moyens de renvois constitués l'un et l'autre de deux roues de chaîne, à savoir 2A, 2B pour le renvoi extérieur et 3A, 3B pour le renvoi intérieur, les moyens de verrouillage V1, V2 étant respectivement associés par exemple aux roues 2B et 3B.

Le poste de chargement 14 est disposé ici à la sortie du renvoi intérieur 2A, 2B et le poste de déchargement 15 à la sortie du renvoi extérieur 3A, 3B, ce qui peut être avantageux dans certaines applications. On peut également trouver avantageux d'allonger quelque peu la longueur de chaîne disponible comme zone d'accumulation. Sur ces figures 7 et 8 on a représenté par des cercles noirs les navettes chargées et par des cercles blancs les navettes vides.

En partant du poste de chargement 14 le trajet de la chaîne comporte successivement la boucle de navettes chargées 20A passant sur la roue tendeuse 10 et, puis le renvoi externe 2A,2B de sortie vers le poste de déchargement 15. On trouve ensuite la boucle 20B et le renvoi interne 3A, 3B de sortie vers le poste de chargement.

Il va de soi que le dispositif de support et de commande des roues tendeuses 10A, 10B pourrait prendre toute autre forme que celle du dispositif à chaîne porte-chariots de la forme de réalisation précédente : ce dispositif pourrait prendre par exemple la forme d'un balancier adapté à exercer une traction sur l'une des roues, tout en relâchant l'autre ou vice-versa. C'est ce qui est suggéré par les flèches correspondantes dans les figures 7 et 8 qui illustrent respectivement les régimes de chargement et de déchargement d'une navette.

On a supposé dans la description qui précède que la chaîne porte-navettes était disposée dans un plan vertical : cette orientation verticale, si elle peut être fort avantageuse, n'est cependant nullement obligatoire. La disposition générale du convoyeur pourrait devenir inclinée voire horizontale dans certaines applications sans que l'agencement général selon l'invention s'en trouve affecté dans ses caractéristiques essentielles.

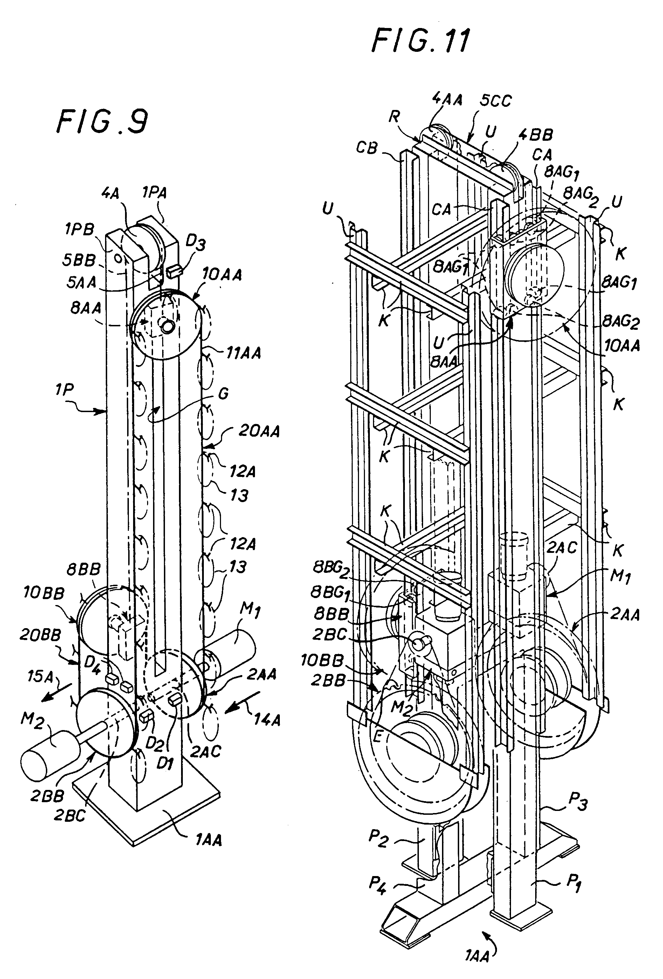

Au surplus il est également possible de réaliser un convoyeur selon l'invention dans lequel les roues de renvoi d'une part et les roues de chaîne tendeuses d'autre part sont disposées respectivement de part et d'autre d'un châssis poteau selon deux orientations perpendiculaires. Un tel mode de réalisation est décrit ci-après en se référant d'abord à la figure 9. Les différents éléments du convoyeur sont portés par un châssis poteau 1P avec son embase 1AA. A la partie inférieure de ce châssis sont prévues les deux roues 2AA et 2BB qui sont calées chacune sur un arbre (respectivement 2AC, 2BC) porté l'un par la paroi 1PA et l'autre par la paroi opposée 1PB. Des moteurs réducteurs-freins M1 et M2 sont prévus pour entraîner en rotation lesdites roues. Ces roues constituent, comme dans le mode de réalisation précédemment décrit, les roues de renvoi. A la partie supérieure du châssis-poteau 1P est fixée, sur une traverse, la roue de préférence dentée 4A libre en rotation. Une chaîne dite, comme précédemment, chaîne porte-chariots est engagée sur cette roue dentée et comporte deux brins verticaux 5AA et 5BB respectivement affectés aux deux chariots dits de chargement 8AA et de déchargement 8BB fixés aux extrémités de cette chaîne et guidés dans leur translation le long du poteau 1P par tout moyen approprié tel qu'un rail, une rampe, ou une glissière de guidage telle qu'illustrée et désignée par la référence G. Chacun des moteurs M1, M2 est adapté à entraîner respectivement les roues 2AA et 2BB dans un sens ou dans l'autre. Dans ce mode de réalisation aussi les chariots 8AA et 8BB effectuent des mouvements pouvant leur faire atteindre, en alternance, chacun deux positions extrêmes opposées, fixées par des butées (non représentées) définissant respectivement une position extrême haute à l'approche de la roue libre 4A et une position extrême basse correspondante. Sur chaque chariot 8AA, 8BB est montée libre en rotation respectivement une roue 10AA, 10BB avec chacune sa denture ou ses encoches particulières, du type de celles des roues 2AA, 2BB. Ces roues 10AA, 10BB sont situées de part et d'autre du châssis-poteau 1P et dans des plans parallèles entre eux mais orthogonaux aux plans, parallèles entre eux, des roues 2AA, 2BB. Une chaîne porte-navettes 11AA, est adaptée à passer successivement sur les roues 10AA, 2AA, 10BB, 2BB. Tout au long de cette chaîne porte-navettes 11A sont disposées, à intervalles égaux prédéterminés, des navettes 12A schématiquement représentées, destinées à convoyer des pièces 13.

Dans ce cas également il est prévu un poste de chargement 14A et un poste de déchargement 15A ainsi que les moyens de détection D1, D2, D3 et D4 dont le rôle a été précédemment défini.

Le fonctionnement du convoyeur ci-dessus décrit est analogue à celui des figures 1 à 8 à savoir :

chaque enlèvement d'une pièce du poste de déchargement 15A détecté par le détecteur D2 provoque la mise en route du moteur M2 pour une rotation d'un pas de la roue 2BB, par exemple dans le sens des aiguilles d'une montre, entraînant, par l'intermédiaire de la chaîne porte-chariots la descente d'un pas du chariot de déchargement 8AA (guidé dans sa glissière G) et par effet de contre-poids la montée d'un pas du chariot de déchargement 8BB. La roue 2AA étant bloquée par son moteur-frein M1 une navette chargée est venue remplacer ainsi, au poste de déchargement, la navette précédemment déchargée ; un pas de la chaîne 11A s'est ainsi trouvé transféré de la boucle 20AA à la boucle 20BB. Cette opération peut se répéter jusqu'au moment de l'arrivée en position limite inférieure du chariot de chargement 8AA et la position limite haute du chariot de déchargement 8BB déclenchant le signal destiné à provoquer l'intervention de l'opérateur pour le réapprovisionnement des pièces et la reconstitution de la réserve accumulée. L'opérateur peut également intervenir, comme expliqué précédemment pour "refaire le plein" de la boucle d'accumulation 20AA. En présentant une pièce en regard du détecteur D1 du poste de chargement 14A on provoque par mise en route du moteur M1 et en raison du blocage de la roue 2BB par son moteur-frein M2 une rotation dans le sens contraire des aiguilles d'une montre de la roue 2AA, la montée d'un pas du chariot de chargement 8AA et la descente correspondante du chariot de déchargement 8BB. On recharge ainsi pas à pas la boucle d'accumulation 20AA.

Dans ce mode de réalisation du convoyeur les mouvements de rotation des roues de renvoi (2AA, 2BB) sont transmis aux roues de chaîne tendeuses (10AA, 10BB) disposées respectivement de part et d'autre du châssis-poteau 1P selon deux orientations orthogonales au moyen de câbles ou de chaînes adaptés à leur entraînement dans des plans différents grâce à des articulations assurant leur changement aisé de direction puis leur entraînement dans la nouvelle orientation imposée.

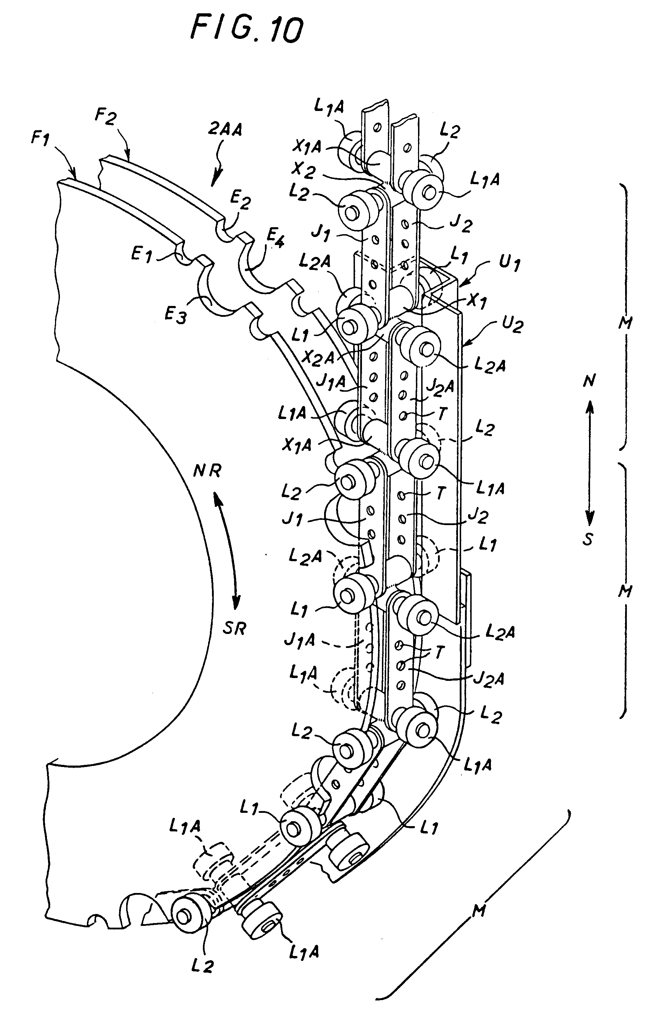

De tels câbles ou chaînes sont de type connu. Un des modes de réalisation pouvant être adopté avantageusement dans le convoyeur ci-dessus décrit est celui des chaînes du type dit biplan dont une illustration est faite à la figure 10 des dessins annexés.

Une telle chaîne est constituée d'un ensemble de maillons M composés chacun d'une paire de demi-maillons dont l'un est constitué par deux flasques parallèles J1-J2 se faisant face et entretoisés par deux axes X1-X2 et dont l'autre est constitué de la même manière par deux flasques parallèles J1A-J2A se faisant face et entretoisés par deux axes X1A-X2A orientés orthogonalement par rapport aux axes X1-X2 et solidaires respectivement de ceux-ci. Chacun des axes X1-X2, X1A-X2A porte du côté de la face externe de chaque flasque une paire de galets L1-L2, L1A-L2A. Chaque galet est prévu à roulement libre et chaque paire de flasques peut tourner indifféremment autour de l'un ou l'autre des axes qu'elle comporte constituant ainsi autant d'axes d'articulation. On conçoit alors qu'une chaîne comportant une succession de tels maillons peut être entraînée en translation suivant une orientation donnée par une sollicitation exercée dans le même sens sur les axes qui sont parallèles entre eux alors que cette orientation peut être modifiée à tout moment et suivre une direction perpendiculaire à la première si la sollicitation est exercée sur les axes parallèles entre eux mais disposés sur la chaîne orthogonalement par rapport aux premiers. En se référant à la figure 10 on voit que si une roue telle que, par exemple, la roue 2AA comporte des flasques F1-F2 à dentures ou à encoches E1-E2 adaptés pour venir en prise avec les axes parallèles entre eux tels que X1-X2, la chaîne est entraînée en translation dans le sens N-S si la roue 2AA est entraînée en rotation dans le sens NR-SR ou dans le sens S-N si la roue est entraînée dans le sens SR-NR. Une bonne progression de cette chaîne est encore facilitée en réalisant des surfaces de roulement et de guidage des galets L1-L2, L1A-L2A. Cette surface peut être constituée par un profilé en forme de U tel qu'illustré présentant au moins deux plans orthogonaux représentant l'un (U1) le chemin de roulement et de guidage des galets du type L1-L2 et l'autre (U2) le chemin de roulement des galets du type L1A-L2A. Cette translation ascendante ou descendante peut être celle, par exemple, de la boucle 20AA de la figure 9. Toutefois lorsqu'un maillon de la chaîne dans son cheminement occupe une position tangente à la roue 10AA (laquelle a son axe orthogonal à celui de la roue 2AA) et si cette roue 10AA est réalisée comme la roue 2AA de la figure 10 pour venir en prise par ses encoches correspondantes avec un des axes de ce maillon qui est orthogonal à la direction des axes qui coopèrent avec les encoches de la roue 2AA, alors le cheminement de la chaîne change de direction et s'infléchit de 90° en étant sollicitée dans cette nouvelle direction par lesdites encoches par suite de la rotation de la roue présentant ces encoches. Une telle cinétique est bien connue avec ce type de chaîne dit biplan. Dans le cas de son application au convoyeur selon l'invention ces changements de direction se produisent donc entre la paire des roues de renvoi 2AA-2BB et la paire des roues de chaîne tendeuses 10AA-10BB.

Bien entendu, comme indiqué précédemment tout moyen établissant les mêmes relations de fonctionnement, de cheminement et d'orientation entre ces deux paires de roues peut être utilisé sans sortir du cadre de l'invention.

On notera par ailleurs que les encoches plus importantes telles que E3-E4 permettent le libre passage des navettes qui seraient montées sur les flasques du type J1-J2 grâce aux trous T réalisés sur ces flasques.

Un convoyeur tel que décrit ci-dessus peut être facilement réalisé en se servant de moyens simples tels que des ensembles d'éléments tubulaires, de profilés et autres éléments de poutraisons entretoisés. C'est ainsi que l'on a représenté sur la figure 11 un montage entièrement fait de profilés métalliques. Les deux roues tendeuses 10AA-10BB sont ainsi montées pour coulisser le long de deux poteaux P1-P2 se faisant face par l'intermédiaire des chariots 8AA,8BB pourvus respectivement de jeux de galets tels que 8AG1-8AG2, 8BG1-8BG2 guidés le long de ces poteaux P1-P2 par des paires de cornières CA-CB. En outre ces poteaux sont réunis à leur partie supérieure par une traverse R sur laquelle sont montées les roues 4AA-4BB jouant le rôle de la roue 4A du convoyeur décrit en référence à la figure 9. La chaîne 5CC coopérant avec ces roues porte à ses extrémités d'une part le chariot 8AA et d'autre part le chariot 8BB. Par aileurs il est prévue une paire de poteaux P3-P4 dont les axes longitudinaux se situent dans un plan orthogonal par rapport au plan passant par les axes longitudinaux des poteaux P1-P2. Sur ces poteaux P3-P4 sont montés les moteurs M1-M2 aux axes 2AC-2BC desquels sont accouplées les roues de renvoi 2AA-2BB réalisées avec leurs encoches E telles que décrites à la figure 10. Ces roues sont accouplées à la chaîne du type biplan décrite précédemment dont les galets qu'elle porte sont guidés par les profilés tels que ceux désignés par la référence U entretoisés par des éléments tels que ceux désignés par les références K.

Grâce à ces éléments profilés simples on dispose d'un moyen pratique et économique de réalisation d'un convoyeur selon l'invention. Il va du reste de soi que la présente invention n'a été décrite qu'à titre purement explicatif et nullement limitatif et que toute modification utile pourra y être apportée sans sortir de son cadre.

## Revendications

1. Convoyeur à accumulation comportant une chaîne sans fin (11) portant des navettes (12) fixées sur elle à des intervalles donnés pour être présentées successivement à un poste de chargement (14) et à un poste de déchargement (15), ladite chaîne suivant un trajet comportant successivement une boucle (20A) à navettes chargées, le poste de déchargement (15), une boucle (20B) à navettes vides et le poste de chargement (14), chacune desdites boucles (20A,20B) comportant une roue de chaîne tendeuse respective (10A,10B), ces roues de chaîne tendeuses (10A,10B) étant portées par des chariots respectifs mobiles (8A,8B), caractérisé en ce que lesdits chariots mobiles (8A,8B) sont fixés sur deux brins parallèles sensiblement verticaux d'une chaîne porte-chariots (5), des moyens étant prévus pour provoquer à chaque opération de chargement un allongement d'un pas de la boucle à navettes chargées avec un raccourcissement correspondant de la boucle à navettes vides, et pour provoquer le transfert inverse d'un pas de la chaîne de la boucle chargée vers la boucle vide lors de chaque opération de déchargement.

2. Convoyeur selon la revendication 1, caractérisé en ce que la chaîne porte-chariots (5) est une chaîne sans fin adaptée à être entraînée au moyen d'un moteur d'entraînement pas-à-pas (7).

3. Convoyeur selon la revendication 2, avec des moyens de renvoi (2,3) respectivement ménagés à proximité de chacun des postes de chargement (14) et de déchargement (15), caractérisé en ce que ces moyens de renvoi sont équipés de moyens de blocage respectifs (V1, V2) adaptés à être activés sous la commande de détecteurs (D1, D2) respectivement associés aux postes de chargement et de déchargement, les déplacements de la chaîne porte-navettes étant commandés par le moteur d'entraînement (7) de la chaîne porte-chariots.

4. Convoyeur selon une quelconque des revendications 1 à 3, caractérisé en ce que les deux boucles (20A, 20B) sont disposées dans un plan commun.

5. Convoyeur selon la revendication 4, caractérisé en ce que ledit plan commun est vertical.

6. Convoyeur selon la revendication 1, caractérisé en ce que les deux bouches (20AA, 20BB) sont disposées dans deux plans verticaux situés de part et d'autre de deux roues de renvoi (2AA, 2BB).

7. Convoyeur selon la revendication 6, caractérisé en ce que les deux roues de renvoi sont équipées de moteurs d'entraînement indépendants (M1, M2).

8. Convoyeur selon la revendication 6, caractérisé par une chaîne sans fin (11AA) de type dit biplan composée de maillons articulés entre eux selon deux axes perpendiculaires.

9. Convoyeur selon l'une quelconque des revendications 6, 7 ou 8, caractérisé en ce que les roues de renvoi (2AA, 2BB) d'une part et les roues de chaîne tendeuses (10AA, 10BB) d'autre part sont disposées respectivement de part et d'autre d'un châssis-poteau (1P-1AA) selon deux orientations perpendiculaires et comportent chacune deux flasques à encoches respectivement adaptés à coopérer avec l'un ou l'autre des deux axes de chacune des articulations des maillons de la chaîne.

10. Convoyeur selon la revendication 8 ou 9, caractérisé en ce que chacun des deux axes de chaque articulation porte une paire de galets de roulement adaptés à coopérer avec un profité de guidage.

## Claims

1. An accumulation conveyor comprising an endless chain (11) carrying shuttle members (12) which are fixed thereto at given intervals to be presented in succession to a loading station (14) and an unloading station (15), said chain following a path successively comprising a loop (20A) with loaded shuttle members, the unloading station (15), a loop (20B) with empty shuttle members and the loading station (14), each of said loops (20A, 20B) comprising a respective tensioning chain wheel (10A, 10B), said tensioning chain wheels (10A, 10B) being carried by respective movable carriages (8A, 8B), characterised in that said movable carriages (8A, 8B) are fixed on two substantially vertical parallel runs of a carriage-carrier chain (5), means being provided to cause in each loading operation elongation by a step of the loop with loaded shuttle members with a corresponding reduction in length of the loop with empty shuttle members and to cause the reverse transfer by a step of the chain of the loaded loop towards the empty loop in each unloading operation.

2. A conveyor according to claim 1 characterised in that the carriage-carrier chain (5) is an endless chain adapted to be driven by means of a stepping drive motor (7).

3. A conveyor according to claim 2 with return means (2, 3) respectively disposed in the vicinity of each of the loading (14) and unloading (15) stations, characterised in that said return means are provided with respective blocking means (V1, V2) adapted to be activated under the control of detectors (D1, D2) respectively associated with the loading and unloading stations, the movements of the shuttle member-carrier chain being controlled by the drive motor (7) of the carriage-carrier chain.

4. A conveyor according to any one of claims 1 to 3 characterised in that the two loops (20A, 20B) are disposed in a common plane.

5. A conveyor according to claim 4 characterised in that said common plane is vertical.

6. A conveyor according to claim 1 characterised in that the two loops (20AA, 20BB) are disposed in two vertical planes on respective sides of two return wheels (2AA, 2BB).

7. A conveyor according to claim 6 characterised in that the two return wheels are provided with independent drive motors (M1, M2).

8. A conveyor according to claim 6 characterised by an endless chain (11AA) of type referred to as biplane type composed of links pivotally connected together at two perpendicular axes.

9. A conveyor according to any one of claim 6, 7 and 8 characterised in that the return wheels (2AA, 2BB) on the one hand and the tensioning chain wheels (10AA, 10BB) on the other hand are respectively disposed on respective sides of a post frame (1P-1AA) in two perpendicular orientations and each comprising two flanges with notches which are respectively adapted to co-operate with one or other of the two axis members of each of the pivot connections of the links of the chain.

10. A conveyor according to claim 8 or claim 9 characterised in that each of the two axis members of each pivot connection bears a pair of rollers adapted to co-operate with a shaped guide member.

## Patentansprüche

1. Speicherförderer mit einer Endloskette (11), die Schiffchen (12) trägt, die auf ihr in gegebenen Abständen befestigt sind, um aufeinanderfolgend an einer Beladestelle (14) und an einer Entladestelle (15) zu liegen, wobei die Kette einem Weg folgt, der aufeinanderfolgend eine Schleife (20A) mit beladenen Schiffchen, die Entladestelle (15), eine Schleife (20B) mit leeren Schiffchen und die Beladestelle (14) umfaßt, wobei jede der Schleifen (20A, 20B) jeweils ein Kettenspannrad (10A, 10B) umfaßt, diese Kettenspannräder (10A, 10B) durch jeweilige bewegliche Wagen (8A, 8B) getragen sind,
dadurch gekennzeichnet,
daß die beweglichen Wagen (8A, 8B) auf zwei parallelen merklich vertikalen Abschnitten einer Tragwagenkette (5) befestigt sind, Mittel vorgesehen sind, um bei jedem Beladevorgang eine Schrittverlängerung der Schleife mit beladenen Schiffchen mit einer entsprechenden Verkürzung der Schleife mit leeren Schiffchen zu bewirken, und um die entgegengesetzte Übertragung eines Kettenschrittes der beladenen Schleife gegen die leere Schleife bei jedem Entladevorgang zu bewirken.

2. Förderer nach Anspruch 1, dadurch gekennzeichnet, daß die Tragwagenkette (5) eine Endloskette ist, die ausgebildet ist, um mittels eines Antriebsschrittmotors (7) angetrieben zu werden.

3. Förderer nach Anspruch 2 mit Getriebemitteln (2,3), die jeweils in der Nähe jeder Beladestelle (14) und Entladestelle (15) vorgesehen sind, dadurch gekennzeichnet, daß diese Getriebemittel mit jeweiligen Verriegelungsmitteln (V1, V2) ausgestattet sind, die ausgebildet sind, um über die Steuerung von Detektoren (D1, D2) aktiviert zu werden, die jeweils den Belade- und Entladestellen zugeordnet sind, die Verschiebungen der Tragschiffchenkette durch den Antriebsmotor (7) der Tragwagenkette gesteuert werden.

4. Förderer nach einem der vorhergehenden Ansprüche 1 bis 3, dadurch gekennzeichnet, daß die zwei Schleifen (20A, 20B) in einer gemeinsamen Ebene angeordnet sind.

5. Förderer nach Anspruch 4, dadurch gekennzeichnet, daß die gemeinsame Ebene vertikal ist.

6. Förderer nach Anspruch 1, dadurch gekennzeichnet, daß die zwei Schleifen (20AA, 20BB) in zwei vertikalen Ebenen angeordnet sind, die beiderseits der zwei Getrieberäder (2AA, 2BB) liegen.

7. Förderer nach Anspruch 6, dadurch gekennzeichnet, daß die zwei Getrieberäder mit unabhängigen Antriebsmotoren (M1, M2) ausgestattet sind.

8. Förderer nach Anspruch 6, gekennzeichnet durch eine Endloskette (11AA) eines Doppelebenentyps, die aus Kettengliedern zusammengesetzt ist, die miteinander entsprechend zweier rechtwinkliger Achsen gelenkig verbunden sind.

9. Förderer nach einem der Ansprüche 6, 7 oder 8, dadurch gekennzeichnet, daß die Getrieberäder (2AA, 2BB) einesteils, und die Kettenspannräder (10AA, 10BB) anderenteils, jeweils beiderseits eines Rahmenpfostens (1P-1AA) entsprechend zweier rechtwinkliger Richtungen angeordnet sind und jedes zwei Flansche mit Ausnehmungen umfaßt, die jeweils ausgebildet sind, um mit der einen oder der anderen der zwei Achsen jeder der Kettengliedgelenkverbindungen zusammenzuwirken.

10. Förderer nach Anspruch 8 oder 9, dadurch gekennzeichnet, daß jede der zwei Achsen jeder Gelenkverbindung ein Paar Rollwalzen trägt, die ausgebildet sind, um mit einem Führungsprofil zusammenzuwirken.
